# EUROPÄISCHE PATENTANMELDUNG

(11) **EP 3 242 042 A2**
(43) Veröffentlichungstag der Anmeldung: **08.11.2017**
(21) Anmeldenummer: 17169477.1
(22) Anmeldetag: 04.05.2017
(51) Int. Cl.: F16B 5/00, A47B 88/919, A47B 88/90, F16B 12/24, F16B 12/46

(54) **VERBINDUNGSVORRICHTUNG FÜR EIN BEWEGBARES MÖBELTEIL EINES MÖBELS**

(30) Priorität: 04.05.2016 DE 202016102380 U
(71) Anmelder: Grass GmbH, 6973 Höchst (AT)
(72) Erfinder: Mintgen, Rolf, 92318 Neumarkt (DE)
(74) Vertreter: Otten, Roth, Dobler & Partner mbB Patentanwälte

(57) **Zusammenfassung**

Vorrichtung für ein bewegbares Möbelteil eines Möbels, insbesondere für eine Schublade, wobei das bewegbare Möbelteil relativ zum Möbel linear bewegbar ist, wobei das bewegbare Möbelteil ein Seitenwandelement aus Glas aufweist. Die Vorrichtung kennzeichnet sich dadurch, dass die Vorrichtung ein quaderartiges, längliches Stützelement umfasst, wobei das Stützelement im angeordneten Zustand am bewegbaren Möbelteil in einem Eckbereich des Bodenelements nach oben abstehend ausgebildet ist, wobei das Stützelement derart ausgestaltet ist, dass im montierten Zustand des bewegbaren Möbelteils das Seitenwandelement in einer Richtung nach außen am Stützelement abgestützt ist und in einer entgegengesetzten Richtung, nach innen an der Frontblende und/oder der Rückwand.

## Beschreibung

Die Erfindung betrifft eine Vorrichtung für ein bewegbares Möbelteil eines Möbels, sowie ein Möbel mit einer solchen Vorrichtung.

### Stand der Technik

Vorrichtungen für Schubladen der einleitend bezeichneten Art sind bereits bekannt.

Bei einer bekannten Variante eine Schublade umfasst die Schublade Seitenwandelemente aus Glas, welche durch eine Klemmvorrichtung an der Schublade im montierten Zustand gehalten werden.

Nachteilig hieran ist, dass die Seitenwandelemente sich aus der Klemmvorrichtung lösen können, bzw. dass die Seitenwandelemente derart an der Schublade angeordnet sind, dass bei einer Bewegung der Schublade ein für einen Nutzer vergleichsweise unangenehmes Geräusch bspw. ein Klacken oder Schlagen zu hören ist.

### Aufgabe und Vorteile der Erfindung

Der Erfindung liegt die Aufgabe zu Grunde, eine alternative Vorrichtung für ein bewegbares Möbelteil bereitzustellen.

Diese Aufgabe wird durch die Merkmale der Ansprüche 1, 2, 3 und 9 gelöst.

In den abhängigen Ansprüchen sind vorteilhafte und zweckmäßige Ausführungsformen der Erfindung angegeben.

Die Erfindung geht von einer Vorrichtung für ein bewegbares Möbelteil eines Möbels, insbesondere für eine Schublade aus, wobei das bewegbare Möbelteil relativ zum Möbel linear bewegbar ist und wobei das bewegbare Möbelteil ein Seitenwandelement aus Glas aufweist.

Das bewegbare Möbelteil ist vorteilhafterweise als Schublade ausgestaltet, wobei die Schublade ein Bodenelement und senkrecht dazu ausgebildet zwei gegenüberliegend angeordnete Seitenwandelemente, eine Frontwand oder Frontblende und eine Rückwand umfasst. Vorstellbar ist, dass neben dem Seitenwandelement eines der weiteren Boden- und/oder Wandelemente des bewegbaren Möbelteils aus Glas ausgebildet ist, insbesondere, dass alle Elemente aus Glas ausgestaltet sind. Vorteilhafterweise ist das Glas ein anorganisches oder mineralisches Glas. Denkbar ist auch, dass das Glas Plexiglas ist.

Das Bodenelement ist vorteilhafterweise als einstückiges und durchgehendes Plattenelement ausgebildet. Bevorzugterweise erstreckt sich das Bodenelement seitlich bis an eine äußerste Begrenzungsfläche des bewegbaren Möbelteils.

Vorteilhafterweise bildet ausschließlich das Seitenwandelement eine insbesondere innere Seitenfläche der Schublade, insbesondere ist keine extra Zarge vorgesehen.

Ist das bewegbare Möbelteil als Außenlade ausgebildet, so ist die Frontblende für einen Nutzer z.B. nicht durchsichtig ausgestaltet. Die Frontblende ist dann z.B. aus Holz, Metall, undurchsichtigem Kunststoff, undurchsichtigem Glas oder einer Kombination der Materialien ausgebildet. Ist das bewegbare Möbelteil als Innenlade gestaltet, kann die Frontblende für einen Nutzer durchsichtig ausgebildet sein.

Das Seitenwandelement ist vorteilhafterweise plattenartig ausgestaltet. Auch ist es vorstellbar, dass das Seitenwandelement aus einem transparenten mineralischen oder anorganischen Glas hergestellt ist, insbesondere ist das Seitenwandelement zumindest abschnittsweise durchlässig bzw. transparent für sichtbares Licht.

Bevorzugterweise umfasst das Seitenwandelement zwei oder mehrere insbesondere gleichartige, z.B. plattenartige Seitenwandteile. Sowohl das Seitenwandelement als auch die Seitenwandteile sind vorteilhafterweise als insbesondere durchgängig, flache, längliche Quaderelemente ausgestaltet. Beispielsweise ist das Seitenwandelement entlang einer Längsachse und/oder senkrecht zur Längsachse in Seitenwandteile unterteilt.

Mindestens ein Seitenwandteil ist z.B. aus Glas ausgestaltet. Umfasst das Seitenwandelement mehrere Seitenwandteile, so ist es denkbar, dass ein Seitenwandteil aus Holz, Metall, Kunststoff und/oder Stoff ausgebildet ist. Vorteilhafterweise sind die Seitenwandteile miteinander gefügt, insbesondere verklebt.

In einer bevorzugten Ausgestaltung der Erfindung weist das bewegbare Möbelteil eine Stützstrebe z.B. aus Metall, insbesondere aus Aluminium auf. Die Stützstrebe dient als ein das bewegbare Möbelteil stabilisierendes Element. Die Stützstrebe kann aus einem U-Profil oder einem Vierkantelement ausgestaltet sein. Insbesondere ist die Stützstrebe rahmenartig ausgebildet und z.B. aus einer Sicht von oben insbesondere rechteckig ausgebildet. Vorstellbar ist, dass das Bodenelement mit seiner Bodenunterseite auf der Stützstrebe oder dem Rahmen angeordnet ist.

Vorteilhafterweise besitzen der Rahmen und das Bodenelement identische Außenmaße. Hierdurch ist es vorstellbar, dass das Seitenwandelement sowohl mit dem Bodenelement als auch mit dem Rahmen und/oder der Stützstrebe über ein Fügeverfahren unlösbar verbunden ist. Bevorzugterweise ist der Rahmen und/oder die Stützstrebe dazu ausgestaltet eine Auszugsschiene für das bewegbare Möbelteil anzuordnen.

Aus einer Sicht auf eine große flache Seitenfläche des Seitenwandelements kann das Seitenwandelement entlang einer Längsachse eine annähernd geschwungene Kontur oder einen geschwungenen Rand aufweisen. Denkbar ist auch, dass die Kontur oder der Rand annähernd zickzackartig ausgebildet ist.

In einer vorteilhaften Ausführungsform der Erfindung ist das Seitenwandelement durch Fügen mit dem Bodenelement und/oder der Rückwand und/oder der Frontblende positionsfest, insbesondere unlösbar verbunden.

Der wesentliche Aspekt der Erfindung ist nun darin zu sehen, dass die Vorrichtung ein quaderartiges, längliches Stützelement umfasst, wobei das Stützelement im angeordneten Zustand am bewegbaren Möbelteil in einem Eckbereich des Bodenelements nach oben abstehend ausgebildet ist, wobei das Stützelement derart ausgestaltet ist, dass im montierten Zustand des bewegbaren Möbelteils das Seitenwandelement in einer Richtung nach außen am Stützelement abgestützt ist und in einer entgegengesetzten Richtung, nach innen an der Frontblende und/oder der Rückwand.

Dadurch ist das Seitenwandelement z.B. formschlüssig, insbesondere positionsfest zwischen dem Stützelement und der Frontblende und/oder der Rückwand angeordnet, vorteilhafterweise geklemmt. Auch ist es dadurch vorstellbar, dass das Seitenwandelement von oben, mit seiner unteren, langen Schmalseite voraus in Richtung einer Oberseite des Bodenelements zwischen dem Stützelement und der Frontblende und/oder der Rückwand einschiebbar ist. Die Oberseite des Bodenelements ist gegenüberliegend zur Unterseite des Bodenelements am Bodenelement vorhanden und bildet eine Schuladeninnenfläche. Die untere, lange Schmalseite des Seitenwandelements ist beispielsweise parallel zur Längsachse des Seitenwandelements ausgebildet.

Bevorzugterweise ist eine Breite einer kurzen Schmalseite des Seitenwandelements kürzer als ein senkrechter Abstand von zwei sich gegenüberliegend ausgebildeten großen Seitenflächen des Seitenwandelements.

Beispielsweise ist ein Rand der kurzen Schmalseite abgeschrägt und/oder als konkave Rille oder Vertiefung ausgebildet. Insbesondere sind zwei sich gegenüberliegend angeordnete Ränder der kurzen Schmalseite abgeschrägt und/oder als konkave Rille oder Vertiefung ausgebildet. Vorteilhafterweise sind drei Ränder der kurzen Schmalseite abgeschrägt und/oder als konkave Rille oder Vertiefung ausgebildet. Der Rand ist bevorzugterweise senkrecht zur Längsachse des Seitenwandelements ausgerichtet. Eine große Seitenfläche des Seitenwandelements bildet vorteilhafterweise die innere oder eine äußere Schubladenseitenfläche. Die kurze Schmalseite des Seitenwandelements ist insbesondere senkrecht zu einer langen Schmalseite des Seitenwandelements und/oder zu einer großen Seitenfläche des Seitenwandelements ausgerichtet.

Weiterhin ist es denkbar, dass eine, zwei oder drei Begrenzungen einer kurzen Schmalseite der Frontwand und/oder der Rückwand, insbesondere entlang einer langen Seite der kurzen Schmalseite, abgeschrägt und/oder als konkave Rille oder Vertiefung ausgebildet sind. Beispielsweise ist im angeordneten Zustand der Frontwand und/oder der Rückwand an der Schublade eine Begrenzung am Seitenwandelement anliegend vorhanden. Insbesondere sind im angeordneten Zustand am bewegbaren Möbelteil ein Rand der kurzen Schmalseite des Seitenwandelements, welcher abgeschrägt und/oder als konkave Rille oder Vertiefung ausgebildet ist, und eine Begrenzung der kurzen Schmalseite der Frontwand und/oder der Rückwand aneinander anliegend vorhanden.

Vorteilhaft erweist sich auch, dass die Vorrichtung ein quaderartiges, längliches Stützelement umfasst, wobei das Stützelement im angeordneten Zustand am bewegbaren Möbelteil in einem Eckbereich des Bodenelements nach oben abstehend ausgebildet ist, wobei das Stützelement derart ausgestaltet ist, dass im montierten Zustand des bewegbaren Möbelteils die Frontwand und/oder die Rückwand in einer Richtung nach außen am Stützelement abgestützt ist und in einer entgegengesetzten Richtung, nach innen am Seitenwandelement.

Bevorzugt ist auch, dass das Stützelement, im angeordneten Zustand am bewegbaren Möbelteil, eine dem Seitenwandelement zugewandte erste Seitenfläche des Stützelements besitzt, wobei die erste Seitenfläche ein, von der Seitenfläche in Richtung des Seitenwandelements, hervorstehendes Halteorgan umfasst. Das Halteorgan ist beispielsweise leistenartig ausgebildet und insbesondere entlang eines Randes der ersten Seitenfläche und z.B. parallel zu einer Längsachse des Stützelements an der ersten Seitenfläche vorhanden. Das Halteorgan kann beispielsweise entlang seiner Längsachse abgeschrägt ausgebildet sein.

Das Stützelement umfasst vorteilhafterweise zwei, drei oder vier Halteorgane. Beispielsweise ist das Stützelement quaderförmig ausgebildet, und umfasst sechs Seitenflächen, wobei es mit einer Seitenfläche z.B. am Bodenelement des bewegbaren Möbelteils angeordnet ist

Vorstellbar ist, dass ein erstes Halteorgan an der ersten Seitenfläche des Stützelements vorhanden ist und ein zweites Halteorgan an einer zweiten Seitenfläche Stützelement vorhanden ist. Insbesondere stehen die beiden Seitenflächen in einem Winkel zueinander. Denkbar ist weiterhin, dass die beiden Halteorgan sich gegenüberliegend am Stützelement vorhanden sind.

Vorteilhafterweise ist ein Halteorgan derart ausgestaltet, dass es an einer dritten, vierten und/oder fünften Seitenfläche des Stützelements ausgebildet ist und die Seitenfläche vorteilhafterweise vollständig überdeckt. Im angeordneten Zustand des Stützelements am bewegbaren Möbelteil bildet das Halteorgan in diesem Fall beispielsweise einen Teil einer Außenseite des bewegbaren Möbelteils. Weiterhin kann das Halteorgan derart ausgestaltet sein, dass es an der dritten, vierten und/oder fünften Seitenfläche des Stützelements derart vorhanden ist, dass es, an der dem Seitenwandelement, der Frontwand und/oder der Rückwand zugewandten ersten oder zweiten Seitenfläche, in Richtung des Seitenwandelements, der Frontwand und/oder der Rückwand hervorsteht. Die erste oder zweite Seitenflächen ist vorteilhafterweise in einem Winkel stehend zur dritten, vierten oder fünften Seitenfläche ausgebildet. Außerdem ist es denkbar, dass das Halteorgan derart an der dritten, vierten oder fünften Seitenfläche vorhanden ist, sodass das Halteorgan über eine kurze Schmalseite des Stützelements übersteht, insbesondere nach oben oder in Richtung des Seitenwandelement, der Frontwand und/oder der Rückwand im angeordneten Zustand am bewegbaren Möbelteil. Die kurze Schmalseite ist im angeordneten Zustand des Stützelements am bewegbaren Möbelteil in einem oberen Bereich des bewegbaren Möbelteils ausgebildet.

Vorstellbar ist, dass die Vorrichtung im montierten Zustand des bewegbaren Möbelteils ein äußeres Seitenwandteil an einer Schmalseite des Seitenwandelements bildet. Die Vorrichtung kann aus Holz, Metall, Glas, Kunststoff und/oder einer Kombination der Materialien ausgestaltet sein.

Das Seitenwandelement ist beispielsweise auf die Vorrichtung gesteckt und/oder geklemmt und/oder an die Vorrichtung gefügt. Bevorzugterweise ist das Seitenwandelement durch die Vorrichtung mit der Frontblende und/oder der Rückwand lösbar verbunden. Denkbar ist aber auch, dass das Seitenwandelement durch die Vorrichtung mit der Frontblende und/oder der Rückwand unlösbar verbunden ist, z.B. durch Fügen.

Unter Fügen wird insbesondere Kleben, Löten, Laserschweißen, Laserschmelzen, Ultraschallschweißen und/oder Ultraschallschmelzen verstanden. Die Vorrichtung ist zum Beispiel über einen Kleber, z.B. ein Klebeband unlösbar mit dem Seitenwandelement verbunden.

In einer vorteilhaften, insbesondere wesentlichen Idee der Erfindung umfasst die Vorrichtung ein Montageorgan, und das Montageorgan ist an einer schmalen Seitenfläche des Seitenwandelements anordenbar, wobei die schmale Seitenfläche im montierten Zustand des bewegbaren Möbelteils der Frontblende und/oder der Rückwand zugewandt ist, wobei das am Seitenwandelement angeordnete Montageorgan in einem Montagevorgang aus einer Richtung von oben in eines zu einer Außenkontur des Montageorgan passendes insbesondere konkav ausgestaltetes Montageelement am bewegbaren Möbelteil einsetzbar ist, sodass das Seitenwandelement im angeordneten Zustand positionsfest am Möbelteil montiert ist.

Das Montageelement bildet z.B. eine Passung für das Montageorgan, hierdurch ist das Seitenwandelement insbesondere formschlüssig an das bewegbare Möbelteil anordenbar.

Das Montageelement das bewegbaren Möbelteils ist beispielsweise an der Frontblende und/oder der Rückwand oder an einem Ecksteher, z.B. dem Stützelement des bewegbaren Möbelteils ausgebildet. Die Frontblende und/oder die Rückwand können das Montageelement umfassen.

Bevorzugterweise ist das Montageelement Bestandteil der Vorrichtung und an die Frontblende und/oder die Rückwand und/oder den Ecksteher angeordnet, insbesondere positionsfest, z.B. durch Fügen.

Das Montageelement besitzt vorteilhafterweise eine Aussparung, welche einen Hinterschnitt ausbildet. Der Hinterschnitt besitzt, z.B. aus einer Sicht von oben auf eine Schmalseite der montierten Frontblende und/oder z.B. auf eine Schmalseite der montierten Rückwand, eine Kontur, welche beispielsweise einer Aufnahme eines Puzzleteils ähnelt.

Das Montageorgan ist beispielweise leistenartig ausgebildet. Denkbar ist weiterhin, dass aus einer Sicht von oben auf das Montageorgan, z.B. parallel zu einer Längsachse des Montageorgans, das Montageorgan eine Silhouette aufweist, welche einer konvexen Form, beispielsweise einem Zahn, eines Puzzleteils gleicht. Wobei die konvexe Form der Außenkontur des Montageorgans insbesondere formschlüssig in die konkave Kontur des Montagelements einsetzbar ist.

In einem vorteilhaften, insbesondere wesentlichen Gedanken der Erfindung weist die Vorrichtung ein Verbindungsorgan, ein bolzenförmiges Verbindungselement und ein gabelartiges Teil auf, wobei das Verbindungsorgan an einer schmalen Seitenfläche des Seitenwandelements anordenbar ist, wobei die schmale Seitenfläche im montierten Zustand des bewegbaren Möbelteils der Frontblende und/oder der Rückwand zugewandt ist, wobei das bolzenförmige Verbindungselement im montierten Zustand des bewegbaren Möbelteils in Richtung des Seitenwandelements abstehend an einer Frontblende und/oder einer Rückwand des bewegbaren Möbelteils ausgebildet ist, wobei die Vorrichtung dazu ausgestaltet ist, im montierten Zustand des bewegbaren Möbelteils die Frontblende und/oder die Rückwand und das Seitenwandelement lösbar miteinander zu verbinden, wobei das bolzenförmige Verbindungselement mit dem gabelartigen Teil am Verbindungsorgan im montierten Zustand des bewegbaren Möbelteils hintergreifbar ist, sodass das Seitenwandelement mit der Frontblende und/oder der Rückwand insbesondere fest verbunden ist.

Das bolzenförmige Verbindungselement ist vorteilhafterweise aus einer Montagerichtung von oben mit dem gabelartigen Teil der Vorrichtung am Verbindungsorgan hintergreifbar.

Das Verbindungsorgan ist beispielsweise leistenartig, zum Beispiel als L-förmiges oder U-förmiges Profil ausgestaltet. Bevorzugterweise ist das Verbindungsorgan an der schmalen Seitenfläche des Seitenwandelements abstehend am Seitenwandelement vorhanden. Das Verbindungsorgan ist beispielsweise an die schmale Seitenfläche gefügt. Hierdurch ist z.B. ein Freiraum zwischen der schmalen Seitenfläche des Seitenwandelements und einem Abschnitt des Verbindungsorgans ausgebildet, in welchen insbesondere das gabelartige Teil einsetzbar ist. Vorstellbar ist, dass der Abschnitt des Verbindungsorgans als eine kurze Seite des L-förmigen oder U-förmigen Profils ausgebildet ist, wobei die kurze Seite des Profils vorteilhafterweise parallel zur schmalen Seitenfläche des Seitenwandelements ausgerichtet ist.

Denkbar ist weiterhin, dass das gabelartige Teil einen nagelförmigen Kopf umfasst, welcher im angeordneten Zustand am bewegbaren Möbelteil eine Außenseite des bewegbaren Möbelteils, insbesondere eine Oberseite bildet. Beispielsweise ist eine Seite des nagelförmigen Kopfes im angeordneten Zustand am bewegbaren Möbelteil bündig zu einer längen, schmalen Seitenfläche des Seitenwandelements angeordnet.

Auch ist es von Vorteil, dass die Vorrichtung ein elektrisch leitendes Organ umfasst.

Das elektrisch leitende Organ kann derart an der Vorrichtung ausgebildet sein, dass das Seitenwandelement bzw. eine an das Seitenwandelement angeordnete Komponente mit elektrischer Energie versorgbar ist. Vorteilhafterweise bildet das elektrisch leitende Organ mit dem Seitenwandelement einen elektrisch leitfähigen Kontakt aus. Auch ist es denkbar, dass das elektrisch leitende Organ derart an der Vorrichtung ausgebildet ist, dass eine an die Frontblende angeordnete elektrische Komponente, beispielsweise eine Lichtquelle, z.B. eine LED oder ein LED-Band ausgehend vom Seitenwandelement mit elektrischer Energie versorgbar ist. Beispielsweise ist die Vorrichtung aus einem Metall elektrisch leitend ausgebildet.

Denkbar ist weiterhin, dass eine Lichtquelle entlang einer schmalen Seitenfläche des Seitenwandelements angeordnet ist, insbesondere ist die Lichtquelle derart an der schmalen Seitenfläche vorhanden, z.B. eingesetzt, dass die Lichtquelle nicht aus der schmalen Seitenfläche hervorsteht.

Das elektrisch leitende Organ ist zum Beispiel als Kabel und/oder als ein elektrischer Leiter und/oder als elektrisch leitender Kontakt ausgebildet.

Vorteilhaft erweist sich auch, dass die Vorrichtung derart ausgestaltet ist, an einer schmalen Seitenfläche des Seitenwandelements insbesondere abstehend angeordnet zu werden, wobei die Vorrichtung, im angeordneten Zustand am Seitenwandelement aus einer Sicht auf die schmale Seitenfläche einen Rand des Seitenwandelements nicht überragt.

Überdies vorteilhaft ist, dass die Frontblende und/oder die Rückwand des bewegbaren Möbelteils einen Hinterschnitt aufweist, wobei die Vorrichtung derart ausgestaltet und am Seitenwandelement angeordnet ist, dass die Vorrichtung von oben in den Hinterschnitt der Frontblende und/oder der Rückwand einschiebbar und/oder einsetzbar ist, wobei das Seitenwandelement im eingesetzten Zustand sich in einer Funktionsposition am bewegbaren Möbelteil befindet.

In einer weiteren vorteilhaften Ausbildung ist die Vorrichtung klammerartig ausgestaltet und beispielsweise an eine Schmalseite des Seitenwandelements anordenbar, z.B. anfügbar. Wobei die Vorrichtung im angeordneten Zustand das Seitenwandelement und die Frontblende und/oder die Rückwand klemmend verbindet.

Vorteilhafterweise ist die Vorrichtung derart ausgestaltet, dass sie eine obere Schmalseite der Frontblende und/oder der Rückwand umgreift und das Seitenwandelement mit der Frontblende und/oder der Rückwand klemmend verbindet.

Denkbar ist, dass die Vorrichtung einen L-förmigen oder U-förmigen Haken aufweist, welche derart am Seitenwandelement angebracht ist, dass der Haken eine obere Schmalseite der Frontblende und/oder der Rückwand übergreift. Beispielsweise wird das Seitenwandelement nach der Frontblende und/oder der Rückwand am bewegbaren Möbelteil angebracht, zum Beispiel von oben eingesetzt.

Weiter wird vorgeschlagen, dass die Vorrichtung einen Stift umfasst und der Stift im angeordneten Zustand am Seitenwandelement an einer schmalen Seitenfläche abstehend angeordnet ist, wobei der Stift dazu vorgesehen ist, eine Montageanordnung der Vorrichtung aufzustecken, wobei die Montageanordnung das Seitenwandelement mit der Frontblende und/oder der Rückwand verbindet.

Vorteilhafterweise umfasst ein Seitenwandelement des bewegbaren Möbelteils eine Bohrung, sodass die Vorrichtung in die Bohrung einsetzbar ist, wobei mittels der Vorrichtung das Seitenwandelement und die Frontblende und/oder die Rückwand verbindbar sind. Beispielsweise ist der Stift an der Frontwand und/oder Rückwand montiert und in die Bohrung des Seitenwandelements einschiebbar.

### Beschreibung der Ausführungsbeispiele

Mehrere Ausführungsbeispiele werden anhand der nachstehenden schematischen Zeichnungen unter Angabe weiterer Einzelheiten und Vorteile näher erläutert.

Es zeigen:
- Figur 1: eine perspektivische Ansicht von seitlich vorne oben auf ein erfindungsgemäßes Möbel mit einer erfindungsgemäßen Schublade,
- Figuren 2 bis 7: unterschiedliche perspektivische Ansichten auf eine Vorrichtung und ein Seitenwandelement einer ersten erfindungsgemäßen Ausgestaltung einer Vorrichtung,
- Figuren 8 bis 12: unterschiedliche Ansichten auf eine Vorrichtung und ein Seitenwandelement einer zweiten erfindungsgemäßen Ausgestaltung einer Vorrichtung und
- Figuren 13 bis 21: unterschiedliche Ansichten auf eine Vorrichtung, ein Seitenwandelement und eine Schublade einer dritten erfindungsgemäßen Ausgestaltung einer Vorrichtung,
- Figuren 22 und 23: unterschiedliche perspektivische Ansichten auf eine Vorrichtung und ein Seitenwandelement einer vierten erfindungsgemäßen Ausgestaltung einer Vorrichtung und
- Figuren 24 bis 26: unterschiedliche perspektivische Ansichten auf eine Vorrichtung und ein Seitenwandelement einer fünften erfindungsgemäßen Ausgestaltung einer Vorrichtung.

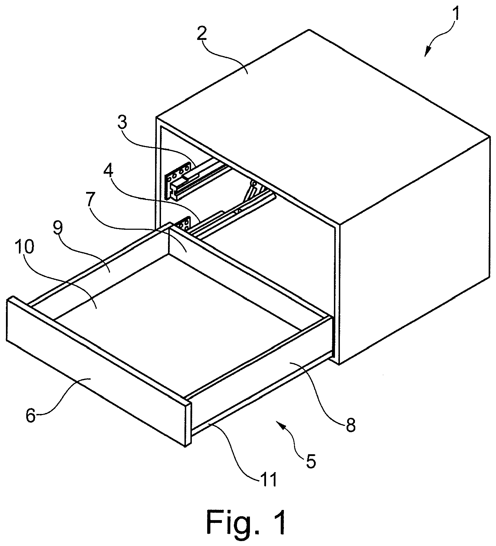

Figur 1 zeigt ein erfindungsgemäßes Möbel 1. Das Möbel 1 umfasst einen Möbelkorpus 2 und eine, über jeweils gegenüberliegend am Möbelkorpus 2 angeordnete Auszüge 3, 4, beweglich geführte Schublade 5. Die Schublade 5 besitzt eine Frontwand 6, eine Rückwand 7, Seitenwände 8, 9 und ein Bodenelement 10. Das Bodenelement 10 ist auf Stützstreben 11 gelagert.

Vorstellbar ist, dass die im Folgenden beschriebenen, unterschiedlichen Ausführungen einer Vorrichtung, welche dazu vorgesehen ist, die Frontwand 6 und/oder die Rückwand 7 mit einer Seitenwand 8, 9 zu verbinden, untereinander und an der Schublade 5 beliebig kombinierbar sind.

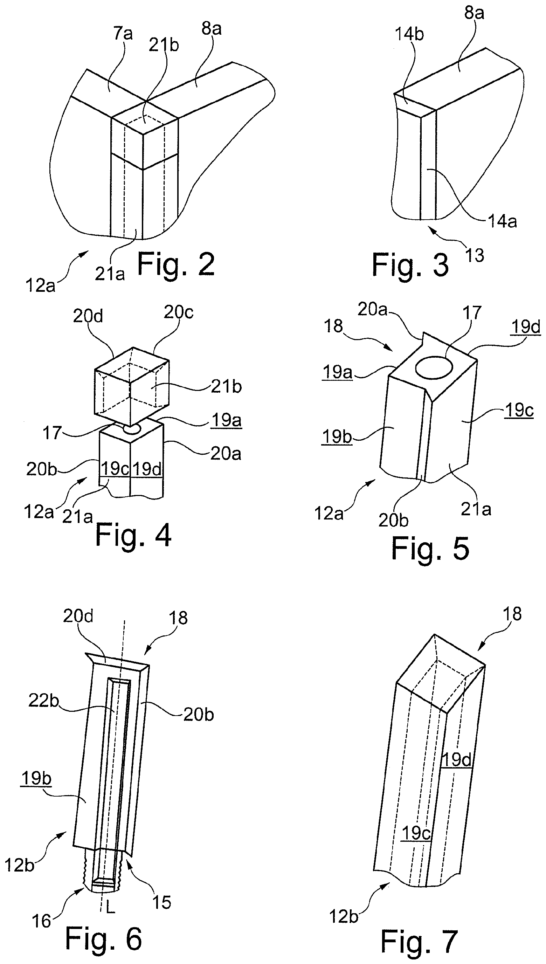

In einem ersten Vorschlag ist eine erfindungsgemäße Vorrichtung als ein Ecksteher 12a, 12b ausgestaltet. Der Ecksteher 12a, 12b ist im angeordneten Zustand an der Schublade 5 beispielsweise in einem Eckbereich der Schublade 5, z.B. zwischen der Seitenwand 8a und der Rückwand 7a, ausgebildet (Figur 2).

Ist die Vorrichtung als Ecksteher 12a, 12b ausgebildet, so kann die Seitenwand 8a z.B. an einer kurzen Schmalseite 13 an Rändern 14a, 14b abgeschrägt ausgeformt sein (Figur 3). Im angeordneten Zustand an der Schublade 5 ist die Seitenwand 8a mit ihrer kurzen Schmalseite 13 z.B. anstehend an einer ersten Seitenfläche 19a am Ecksteher 12a, 12b angeordnet (Figur 2).

Vorstellbar sind beispielsweise zwei Ausbildungsvarianten des Eckstehers 12a, 12b. Den beiden Ausbildungsvarianten gemein ist, dass der Ecksteher 12a, 12b z.B. quaderförmig, stabartig ausgebildet ist und im angeordneten Zustand an der Schublade 5 mit einer Längsachse L senkrecht zum Bodenelement 10 der Schublade 5 nach oben abstehend am Bodenelement 10 und/oder an der Stützstrebe 11 befestigt ist, zum Beispiel angeschraubt ist. Der Ecksteher 12b kann hierzu an einer kurzen Schmalseite 15 ein Außengewinde 16 aufweisen, mittels welchem der Ecksteher 12b an das Bodenelement 10 und/oder die Stützstrebe 11 anschraubbar ist (Figur 6). Auch ist es vorstellbar, dass der Ecksteher 12a eine Bohrung 17 parallel zu seiner Längsachse L aufweist. Die Bohrung 17 kann als Langloch ausgebildet sein und den Ecksteher 12a insbesondere vollständig durchdringen. Hierdurch kann der Ecksteher 12a im angeordneten Zustand an der Schublade 5 beispielsweise von oben, zum Beispiel mittels eines Werkzeugs, mit dem Bodenelement 10 und/oder der Stützstrebe 11 insbesondere positionsfest verbunden werden. Die Bohrung 17 umfasst zum Beispiel ein Innengewinde, mittels welchem der Ecksteher 12a mit dem Bodenelement 10 und/oder der Stützstrebe 11 verbunden werden kann (Figur 5).

Denkbar ist auch, dass zwei Bohrungen 17 an sich gegenüberliegend ausgebildeten Schmalseiten 15, 18 des Eckstehers 12a vorhanden sind.

Der Ecksteher 12a, 12b ist vorteilhafterweise derart an der Schublade 5 angeordnet, dass er mit Seitenflächen 19a, 19b z.B. anstehend an der Seitenwand 8a und der Rückwand 7a angeordnet ist. Seitenflächen 19c, 19d bilden, im angeordneten Zustand des Eckstehers 12a, 12b an der Schublade 5, insbesondere Außenflächen der Schublade 5.

An einem Randbereich der Seitenfläche 19a, 19b des Eckstehers 12a, 12b ist ein z.B. leistenartiges Halteorgan 20a, 20b abstehend von der Seitenfläche 19a, 19b vorhanden. Außerdem kann der Ecksteher 12a, 12b ein Halteorgan 20c, 20d umfassen, welches an einem weiteren Randbereich der Seitenfläche 19a, 19b abstehend von der Seitenfläche 19a, 19b vorhanden ist, wobei das Halteorgan 20c, 20d im angeordneten Zustand des Eckstehers 19a, 19b an der Schublade 5 vorteilhaft die Seitenwand 8a und die Rückwand 7a an zumindest einem Teilbereich übergreift. Im angeordneten Zustand an der Schublade 5 bildet der Randbereich der Seitenfläche 19a, 19b, insbesondere das Halteorgan 20a bis 20d vorteilhafterweise eine Teilbereich einer Außenfläche der Schublade 5.

Der Ecksteher 12a kann vorteilhafterweise zweiteilig ausgestaltet sein (Figur 4). Der Ecksteher 12a kann ein erstes längliches, stabförmiges Element 21a umfassen und ein zweites, würfelförmiges Element 21b. Beide Elemente 21a, 21b besitzen vorteilhafterweise Halteorgane 20a, 20b. Ist der Ecksteher 12a zweiteilig ausgestaltet, so kann in einem ersten Montagevorgang das erste Element 21a am Bodenelement 10 befestigt werden, in einem darauffolgenden Montagevorgang die Seitenwand 8, 8a, 9, die Frontwand 6 und die Rückwand 7, 7a an der Schublade 5 angeordnet werden und in einem abschließenden Montagevorgang das zweite, würfelförmiges Element 21b an das erste Element 21a montiert, z.B. an der Bohrung 17 verschraubt werden.

Ist der Ecksteher 12b einteilig ausgestaltet, so wird bei einer Montage der Schublade 5 zunächst die Seitenwand 8, 8a, 9, die Frontwand 6 und die Rückwand 7, 7a an die Schublade 5 angeordnet und anschließend der Ecksteher 12b vorteilhaft von oben zwischen die Seitenwand 8, 8a, 9 und die Frontwand 6 oder die Rückwand 7, 7a eingeschoben und an der Schublade 5 befestigt.

Darüber hinaus kann der Ecksteher 12b an einer Seitenfläche 19a, 19b eine leistenartige Vertiefung 22a, 22b aufweisen. In die Vertiefung 22a, 22b ist zum Beispiel ein LED-Band 23a, 23b einbringbar (Figuren 6, 7).

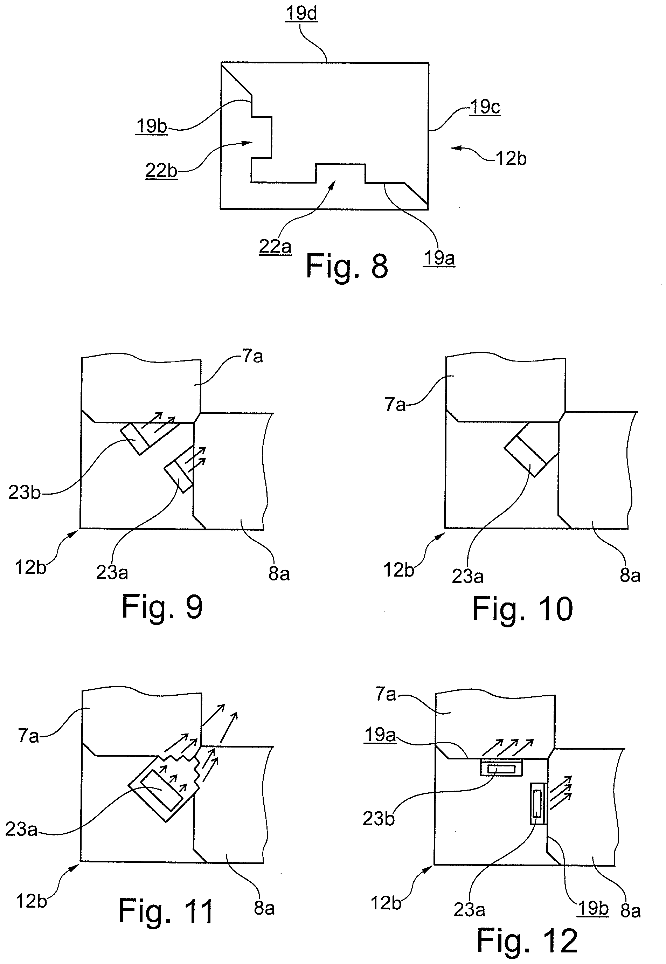

Die Figuren 8 bis 12 zeigen einen Ecksteher 12b in einem Querschnitt von oben parallel zu seiner Längsachse L betrachtet, wobei in den Figuren 9 bis 12 angeordnete Wandelemente 7a, 8a gezeigt sind.

Das LED-Band 23a, 23b kann derart in der Vertiefung 22a, 22b angeordnet sein, dass es unterschiedliche Abstrahlrichtungen und/oder eine unterschiedliche Abstrahlcharakteristik aufweist (Figuren 9 bis 12).

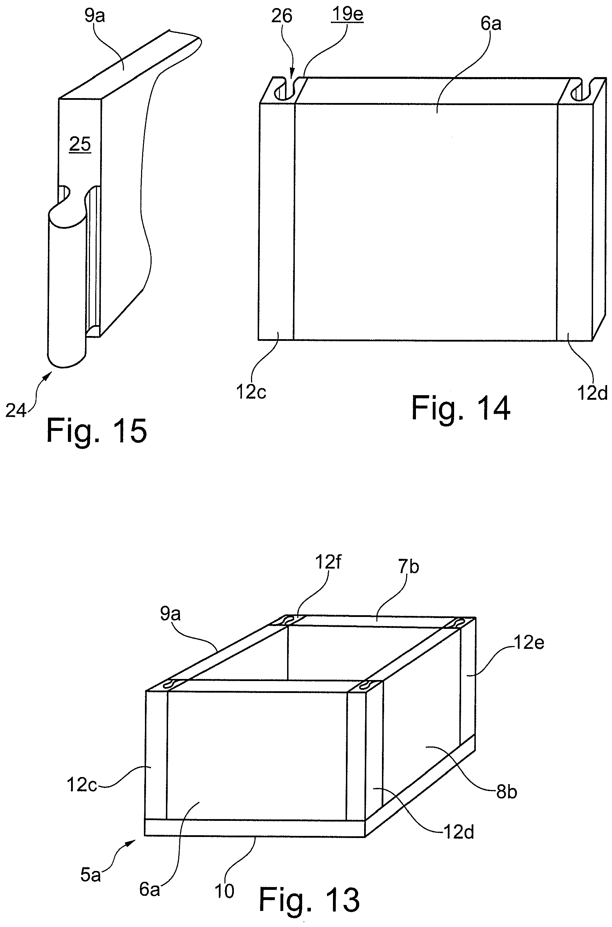

In einem zweiten Vorschlag ist eine erfindungsgemäße Vorrichtung z.B. als ein gebogenes oder geformtes Blechelement 24 ausgebildet. Wobei das gebogene Blechelement 24 parallel zu einer Längsachse betrachtet eine konvexe, insbesondere puzzelförmige Kontur aufweist. Das gebogene Blechelement 24 ist an einem der konvexen Kontur gegenüberliegenden Ende, an eine schmale Seitenfläche 25 der Seitenwand 9a befestigt, zum Beispiel geklebt (Figur 15).

Zwischen Eckstehern 12c bis 12f, welche z.B. in Eckbereichen einer erfindungsgemäßen Schublade 5a abstehend angeordnet sind, ist zum Beispiel eine Frontwand 6a bzw. eine Rückwand 7b befestigt (Figuren 13, 14). An einer Seitenflächen 19e des Eckstehers 12c, welche, im angeordneten Zustand an der Schublade 5a der Seitenfläche 25 der Seitenwand 9a, gegenüberliegend ausgebildet ist, ist eine Rille 26 ausgebildet. Die Rille 26 erstreckt sich vorteilhaft parallel zu einer Längsachse des Eckstehers 12c insbesondere entlang einer Länge der Seitenfläche 19e des Ecksteher 12c. Die Rille 26 besitzt zum Beispiel aus einer Sicht von oben, parallel zur Längsachse L des Eckstehers 12c einen konkaven Umriss mit beispielsweise einem Hinterschnitt. Der konkave Umriss ist zum Beispiel in Form einer Puzzlekontur ausgestaltet. Insbesondere ist die konvexe Kontur des Blechelements 24 passend zum konkaven Umriss des Eckstehers 12c ausgestaltet. Umfasst der konkave Umriss z.B. keinen Hinterschnitt, sind das Blechelement 24 und der konkave Umriss vorteilhaft im angeordneten Zustand aneinander gefügt.

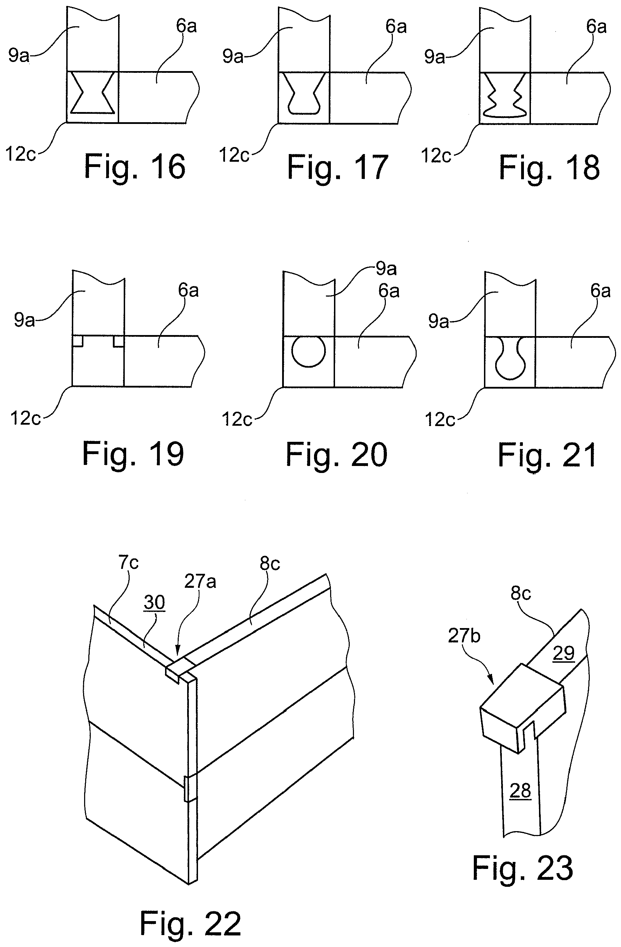

Die Figuren 16 bis 21 zeigen den Ecksteher 12c und die Frontwand 6a und die Seitenwand 9a in einem Querschnitt von oben parallel zur Längsachse L des Eckstehers 12c betrachtet. Den Figuren 16 bis 21 sind weitere verschiedene vorstellbare konvexe Konturen des Blechelements 24 bzw. konkave Umrisse des Eckstehers 12c zu entnehmen. Den konvexen Konturen und konkaven Umrissen gemein ist vorteilhafterweise, dass sie passend zueinander ausgestaltet sind, und dass der konkave Umriss beispielsweise einen Hinterschnitt umfasst.

In einem dritten Vorschlag ist eine erfindungsgemäße Vorrichtung als ein hakenförmiges Halteelement 27a, 27b ausgebildet (Figuren 22, 23). Das Halteelement 27a, 27b kann an einem ersten Ende an einer Schmalseite 28, 29 einer Seitenwand 8c angebracht sein, insbesondere angeklebt. An einem, dem ersten Ende gegenüberliegenden Ende kann das Haltelement 27a, 27b aus einer seitlichen Sicht auf das Halteelement 27a, 27b gesehen eine U-Form aufweisen, insbesondere hakenförmig ausgebildet sein. Im angeordneten Zustand am bewegbaren Möbelteil übergreift oder umgreift das Halteelement 27a, 27b eine schmale Oberseite 30 einer Rückwand 7c. Hierdurch ist die Seitenwand 8c vorteilhafterweise in einer Richtung parallel zur Oberseite 30 der Rückwand 7c positionsfest am bewegbaren Möbelteil befestigt.

In einem vierten Vorschlag umfasst eine erfindungsgemäße Vorrichtung einen Nagel 31, ein Verbindungsorgan 32 und einen Bolzen 33.

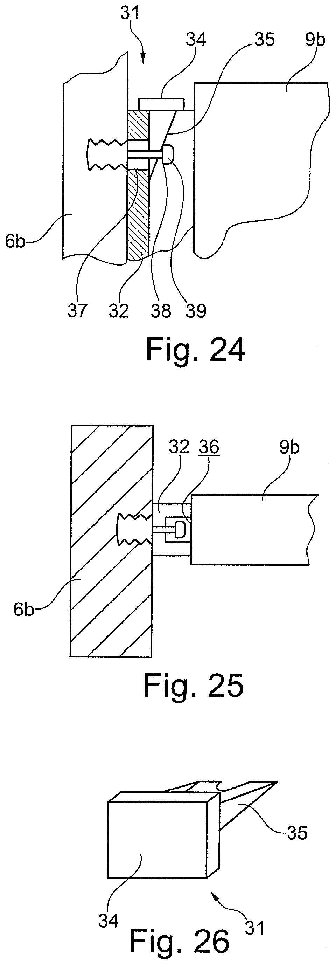

Figur 24 zeigt einen Querschnitt durch eine Frontwand 6b, die Vorrichtung und eine Seitenwand 9b parallel zu einer Längsachse der Seitenwand 9b. Figur 25 zeigt den hierzu senkrechten Schnitt durch die Frontwand 6b, die Vorrichtung und die Seitenwand 9b in Richtung Bodenelement 10 gesehen.

Der Nagel 31 besitzt einen Kopf 34 und ein gabelartiges Sicherungselement 35 (Figur 26). Das Verbindungsorgan 32 ist z.B. als U-förmiges Profil ausgebildet und beispielsweise derart an eine schmale Seitenfläche 36 einer Seitenwand 9b angebracht, dass das Profil mit der Seitenfläche 36 eine kanalartigen Hohlraum einschließt (Figuren 24, 25). Das Verbindungsorgan 32 umfasst weiterhin eine Öffnung 37, durch welche im angeordneten Zustand der Seitenwand 9b und des Verbindungsorgans 32 an der Schublade 5 der Bolzen 33 einsteckbar ist. Der Bolzen 33 ist dabei z.B. an der Frontwand 6b verankert.

Vorteilhafterweise ist der Bolzen 33 derart in das Verbindungsorgan 32 einführbar, dass der Bolzen 33 an einem Vorsprung 38 durch den Nagel 31 hintergreifbar ist. Der Nagel 31 kann hierbei z.B. von oben zwischen eine Fläche des Verbindungsorgans 32 und den Vorsprung 38 des Bolzens 33 insbesondere klemmend einführbar ausgestaltet sein.

### Bezugszeichenliste

- 1: Möbel
- 2: Möbelkorpus
- 3, 4: Auszug
- 5, 5a: Schublade
- 6, 6a, 6b: Frontwand
- 7, 7a bis 7c: Rückwand
- 8, 8a bis 8c: Seitenwand
- 9, 9a, 9b: Seitenwand
- 10: Bodenelement
- 11: Stützstrebe
- 12a bis 12f: Ecksteher
- 13: Schmalseite
- 14a, 14b: Rand
- 15, 18: Schmalseite
- 16: Außengewinde
- 17: Bohrung
- 19a bis 19e: Seitenfläche
- 20a bis 20d: Halteorgan
- 21a, 21b: Element
- 22a, 22b: Vertiefung
- 23a, 23b: LED-Band
- 24: Blechelement
- 25: Seitenfläche
- 26: Rille
- 27a, 27b: Halteelement
- 28, 29: Schmalseite
- 30: Oberseite
- 31: Nagel
- 32: Verbindungsorgan
- 33: Bolzen
- 34: Kopf
- 35: Sicherungselement
- 36: Seitenfläche
- 37: Öffnung
- 38: Vorsprung

## Patentansprüche

1. Vorrichtung für ein bewegbares Möbelteil eines Möbels (1), insbesondere für eine Schublade (5, 5a), wobei das bewegbare Möbelteil (5, 5a) relativ zum Möbel (1, 2) linear bewegbar ist, wobei das bewegbare Möbelteil (5, 5a) ein Seitenwandelement (8, 8a bis 8c, 9, 9a, 9b) aus Glas aufweist, **dadurch gekennzeichnet, dass**
die Vorrichtung ein quaderartiges, längliches Stützelement (12a bis 12f) umfasst, wobei das Stützelement (12a bis 12f) im angeordneten Zustand am bewegbaren Möbelteil (5, 5a) in einem Eckbereich des Bodenelements (19) nach oben abstehend ausgebildet ist, wobei das Stützelement (12a bis 12f) derart ausgestaltet ist, dass im montierten Zustand des bewegbaren Möbelteils (5, 5a) das Seitenwandelement (8, 8a bis 8c, 9, 9a, 9b) in einer Richtung nach außen am Stützelement (12a bis 12f) abgestützt ist und in einer entgegengesetzten Richtung, nach innen an der Frontblende (6, 6a, 6b) und/oder der Rückwand (7, 7a, 7b, 7c).

2. Vorrichtung nach dem Oberbegriff des Anspruchs 1, insbesondere nach Anspruch 1, **dadurch gekennzeichnet, dass** die Vorrichtung ein Montageorgan (24) umfasst, und das Montageorgan (24) an einer schmalen Seitenfläche (25) des Seitenwandelements (9a) anordenbar ist, wobei die schmale Seitenfläche (25) im montierten Zustand des bewegbaren Möbelteils (5, 5a) der Frontblende (6, 6a, 6b) und/oder der Rückwand (7, 7a, 7b, 7c) zugewandt ist, wobei das am Seitenwandelement (9b) angeordnete Montageorgan (25) in einem Montagevorgang aus einer Richtung von oben in eines zu einer Außenkontur des Montageorgans passendes, insbesondere konkav ausgestaltetes Montageelement (26) am bewegbaren Möbelteil (5, 5a) einsetzbar ist, sodass das Seitenwandelement (9b) im angeordneten Zustand positionsfest am bewegbaren Möbelteil (5, 5a) montiert ist.

3. Vorrichtung nach dem Oberbegriff des Anspruchs 1, insbesondere nach Anspruch 1, **dadurch gekennzeichnet, dass**
die Vorrichtung ein Verbindungsorgan (32), ein bolzenförmiges Verbindungselement (33) und ein gabelartiges Teil (31) aufweist, wobei das Verbindungsorgan (32) an einer schmalen Seitenfläche ((36) des Seitenwandelements (9b) anordenbar ist, wobei die schmale Seitenfläche (36) im montierten Zustand des bewegbaren Möbelteils (5, 5a) der Frontblende (6, 6a, 6b) und/oder der Rückwand (7, 7a, 7b, 7c) zugewandt ist, wobei das bolzenförmige Verbindungselement (33) im montierten Zustand des bewegbaren Möbelteils (5, 5a) in Richtung des Seitenwandelements (36) abstehend an einer Frontblende (6, 6a, 6b) und/oder einer Rückwand (7, 7a, 7b, 7c) des bewegbaren Möbelteils (5, 5a) ausgebildet ist, wobei die Vorrichtung dazu ausgestaltet ist, im montierten Zustand des bewegbaren Möbelteils (5, 5a) die Frontblende (6, 6a, 6b) und/oder die Rückwand (7, 7a, 7b, 7c) und das Seitenwandelement (9b) lösbar miteinander zu verbinden, wobei das bolzenförmige Verbindungselement (33) mit dem gabelartigen Teil (31) am Verbindungsorgan (32) im montierten Zustand des bewegbaren Möbelteils (5, 5a) hintergreifbar ist, sodass das Seitenwandelement (9b) mit der Frontblende (6, 6a, 6b) und/oder der Rückwand (7, 7a, 7b, 7c) insbesondere fest verbunden ist.

4. Vorrichtung nach einem der vorangegangenen Ansprüche, **dadurch gekennzeichnet, dass** die Vorrichtung ein elektrisch leitendes Organ (23a, 23b) umfasst.

5. Vorrichtung nach einem der vorangegangenen Ansprüche, **dadurch gekennzeichnet, dass** die Vorrichtung derart ausgestaltet ist, an einer schmalen Seitenfläche (25, 28 36) des Seitenwandelements (8c, 9a, 9b) insbesondere abstehend angeordnet zu werden, wobei die Vorrichtung, im angeordneten Zustand am Seitenwandelement (8c, 9a, 9b) aus einer Sicht auf die schmale Seitenfläche (25, 28 36) einen Rand des Seitenwandelements (8c, 9a, 9b) nicht überragt.

6. Vorrichtung nach einem der vorangegangenen Ansprüche, **dadurch gekennzeichnet, dass** die Frontblende (6, 6a, 6b) und/oder die Rückwand (7, 7a, 7b, 7c) des bewegbaren Möbelteils (5, 5a) einen Hinterschnitt (26) aufweist, wobei die Vorrichtung derart ausgestaltet und am Seitenwandelement (9a) angeordnet ist, dass die Vorrichtung von oben in den Hinterschnitt (26) der Frontblende (6, 6a, 6b) und/oder der Rückwand (7, 7a, 7b, 7c) einschiebbar und/oder einsetzbar ist, wobei das Seitenwandelement (9a) im eingesetzten Zustand sich in einer Funktionsposition am bewegbaren Möbelteil (5, 5a) befindet.

7. Vorrichtung nach einem der vorangegangenen Ansprüche, **dadurch gekennzeichnet, dass** die Vorrichtung (27a, 27b) klammerartig ausgestaltet ist, wobei die Vorrichtung (27a, 27b) im angeordneten Zustand das Seitenwandelement (8c) und die Frontblende (6, 6a, 6b) und/oder die Rückwand (7, 7a, 7b, 7c) klemmend verbindet.

8. Vorrichtung nach einem der vorangegangenen Ansprüche, **dadurch gekennzeichnet, dass** die Vorrichtung einen Stift (33) umfasst und der Stift (33) im angeordneten Zustand am Seitenwandelement (9b) an einer schmalen Seitenfläche abstehend angeordnet ist, wobei der Stift (33) dazu vorgesehen ist, eine Montageanordnung (31, 32) der Vorrichtung aufzustecken, wobei die Montageanordnung (31, 32) das Seitenwandelement (9b) mit der Frontblende (6, 6a, 6b) und/oder der Rückwand (7, 7a, 7b, 7c) verbindet.

9. Möbel (1), insbesondere bewegbares Möbelteil (5, 5a), mit einer Vorrichtung nach einem der vorangegangenen Ansprüche.

10. Möbel (1) nach Anspruch 9, **dadurch gekennzeichnet, dass** das Seitenwandelement eine Bohrung umfasst, sodass die Vorrichtung in die Bohrung einsetzbar ist, wobei mittels der Vorrichtung das Seitenwandelement (8, 8a bis 8c, 9, 9a, 9b) und die Frontblende (6, 6a, 6b) und/oder die Rückwand (7, 7a, 7b, 7c) verbindbar sind.
